# EUROPEAN PATENT APPLICATION

(11) **EP 4 276 989 A1**
(43) Date of publication of application: **15.11.2023**
(21) Application number: 22860252.0
(22) Date of filing: 10.08.2022
(51) Int. Cl.: H01M 50/202, H01M 50/213, H01M 50/244

(54) **BATTERY AND ELECTRICAL DEVICE**

(30) Priority: 27.08.2021 CN 202110998416
(71) Applicant: Contemporary Amperex Technology Co., Limited, Ningde, Fujian 352100 (CN)
(72) Inventor: WANG, Zhichao, Ningde, Fujian 352100 (CN); CAO, Rong, Ningde, Fujian 352100 (CN)
(74) Representative: Ziebig Hengelhaupt Intellectual Property Attorneys Patentanwaltskanzlei PartGmbB
(86) International application number: PCT/CN2022/111478
(87) International publication number: WO 2023/024906

(57) **Abstract**

Embodiments of the present application relate to the technical field of new energy sources, and specifically relate to a battery and an electrical apparatus. The battery comprises: a first battery cell; a first holder and a second holder provided at both ends of the first battery cell along a first direction, the first holder is recessed in a direction away from the second holder along the first direction to form a first position-limit portion, and the second holder is recessed away from the first holder along the first direction to form a second position-limit portion, so that the first position-limit portion and the second position-limit portion are oppositely provided, and the first holder and the second holder are buckled along the first direction, so that the first position-limit portion and the second position-limit portion cooperate to form a position-limit space for accommodating the first battery cell. Through the above method, the battery provided in the embodiments of the present invention is capable of simplifying the holder structure, and facilitating the fixation, assembly, repair and replacement of a battery cell inside the battery.

## Description

### Cross-Reference to Related Applications

The present application claims the priority of Chinese Patent Application 202110998416.7, filed on Aug. 27, 2021 and entitled "BATTERY AND ELECTRICAL APPARATUS", the entire contents of which are incorporated herein by reference.

### Technical Field

Embodiments of the present application relate to the technical field of new energy sources, and specifically relate to a battery and an electrical apparatus.

### Background Art

Energy saving and emission reduction is the key to the sustainable development of automobile industry, and electric vehicles have become an important part of the sustainable development of automotive industry due to their advantages of energy saving and environmental protection. For electric vehicles, battery technology is an important factor related to their development.

The inventors of the present application have found in research that assembling an existing battery is complicated, with a low degree of automation and cumbersome assembly, and the battery generally comprises tens or even hundreds of battery cells, which results in a low assembly efficiency of the battery; and moreover, when a battery cell in the battery needs to be repaired or replaced, the battery needs to be cumbersomely disassembled to take out the battery cell, and the repair is time consuming and inconvenient.

### Summary of the Invention

In view of the above-mentioned problems, embodiments of the present application provide a battery and an electrical apparatus, so that the holder structure can be simplified, and the fixation, assembly, repair and replacement of a battery cell inside the battery can be facilitated.

According to an aspect of the embodiments of the present application, there is provided a battery comprising: a first battery cell; a first holder and a second holder provided at both ends of the first battery cell along a first direction, the first holder is recessed in a direction away from the second holder along the first direction to form a first position-limit portion, and the second holder is recessed away from the first holder along the first direction to form a second position-limit portion, so that the first position-limit portion and the second position-limit portion are oppositely provided, and the first holder and the second holder are buckled along the first direction, so that the first position-limit portion and the second position-limit portion cooperate to form a position-limit space for accommodating the first battery cell.

With the above-mentioned solution, the first holder and the second holder can be buckled to the first battery cell and limit the position of the first battery cell, and the first holder and the second holder can be buckled to the first battery cell along the first direction without the need to insert the first battery cell into the position-limit space in a direction perpendicular to the first direction, so that the assembly accuracy requirement of the first battery cell is relatively low, and the assembly is convenient, which is advantageous for realizing the automation of the assembly of the first battery cell, the first holder and the second holder, thereby improving the assembly efficiency of battery production and meeting the production capacity requirement; in addition, when repairing the battery in the present solution, one of the first battery cells which needs to be repaired or replaced can be removed by disassembling the corresponding two mutually cooperating first holder and second holder without disassembling other well-assembled parts. Therefore, the battery structure of the present solution is convenient for repair and replacement, and the repair time can be effectively shortened.

In an alternative, an end portion of the first holder along a second direction is provided with a first connecting portion, an end portion of the second holder along the second direction is provided with a second connecting portion, the first connecting portion and the second connecting portion are buckled to each other, the second direction is perpendicular to the first direction, and the second direction is perpendicular to the thickness direction of the first holder.

With the above-mentioned solution, a plurality of battery cells can be accommodated in the position-limit space at one time by buckling only twice at the two end portions, so that the efficiency of assembly can be effectively improved, and the production can be accelerated; and moreover, the provision of the first connecting portion or the second connecting portion at the end portion of the first holder or the second holder can prevent the buckling place from being blocked by the battery cell, and facilitate unbuckling the end portion of the first holder or the second holder during repair and replacement.

In an alternative, the first connecting portion is provided with a groove, the second connecting portion is provided with a protrusion, and the protrusion is snap fitted in the groove, so that the first holder and the second holder are buckled to each other.

With the above-mentioned solution, the first connecting portion and the second connecting portion can be self-fitted through the protrusion and the groove without adding other parts, which can reduce working procedures and accelerate production.

In an alternative, the first holder further comprises a first surface in the thickness direction, the first surface is provided with a glue injection port, the surface of the first position-limit portion facing the first battery cell is provided with a glue overflow port, and the glue injection port is communicated with the glue overflow port, so that the glue flowing into the glue injection port enters the position-limit space through the glue overflow port.

With the above-mentioned solution, after the glue is injected into the glue injection port, the glue can flow into the gap between the first battery cell and the first holder as well as the second holder in the position-limit space through the glue overflow port, and after coagulation, the first battery cell is adhesively connected to the first holder and the second holder, thereby reducing the difficulty of injecting the glue into the gap between the first holder as well as the second holder and the first battery cell; and moreover, the glue can be injected after the first holder, the second holder and the first battery cell are assembled, so that the glue begins to spread from the contact surface, which is advantageous for the glue to better fill the gap so as to reduce the amount of the glue overflowing the position-limit space, thereby reducing the amount of the glue used and lowering the cost.

In an alternative, the first holder is provided with at least two first position-limit portions, the at least two first position-limit portions are arranged along the second direction, the second direction is perpendicular to the first direction, and the second direction is also perpendicular to the thickness direction of the first holder.

With the above-mentioned solution, the same first holder or the same second holder can be used to provide a plurality of position-limit spaces at the same time, and each position-limit space can be used to accommodate one battery cell respectively, so that a plurality of battery cells can be assembled in a row at the same time by buckling one first holder and one second holder, thereby further improving the assembly efficiency.

In an alternative, the glue overflow ports on the at least two first position-limit portions are communicated with the same glue injection port. With the above-mentioned solution, by injecting the glue into one glue injection port, the glue can be discharged from a plurality of glue overflow ports, which is advantageous for improving the convenience of the glue injection operation and the glue injection efficiency.

In an alternative, the battery further comprises a second battery cell, the first holder is further provided with a third position-limit portion located on the surface of the first holder away from the second holder, the third position-limit portion is formed by recessing the first holder towards the second holder, and the third position-limit portion is used to form a position-limit space for the second battery cell.

With the above-mentioned solution, both sides of the same first holder can be provided with one second holder, and the first holder is buckled to the second holders on both sides respectively, so that the positions of the two rows of battery cells can be limited by buckling the three holders, thus facilitating the reduction of assembly steps to improve the assembly efficiency.

In an alternative, the surface of the first position-limit portion facing the first battery cell is provided with a glue overflow port, the surface of the third position-limit portion facing the second battery cell is provided with a glue overflow port, and the two glue overflow ports on the first position-limit portion and the third position-limit portion are communicated with the same glue injection port.

With the above-mentioned solution, by injecting the glue into one glue injection port, the glue can be discharged from a plurality of glue overflow ports, which is advantageous for improving the convenience of the glue injection operation and the glue injection efficiency.

In an alternative, the battery comprises at least two first holders and at least two second holders, and along the thickness direction of the first holders, the at least two first holders are arranged along the thickness direction, and buckled to the corresponding second holders to form a plurality of position-limit spaces.

With the above-mentioned solution, the at least two first holders and the at least two second holders can be arranged along the thickness direction, so as to realize the position-limitation and fixation of both ends of the first battery cell, and reduce the wobble of the position of the battery cell in the position-limit space, thereby further improving the structural stability of the whole battery.

In an alternative, the first battery cell comprises two end faces oppositely provided along the thickness direction, and both of the first holders are provided with blocking portions, and the two blocking portions abut against the two end faces respectively to restrict the displacement of the first battery cell along the thickness direction.

With the above-mentioned solution, the provision of the blocking portion can simultaneously restrict the displacement of the first battery cell in the first direction, the second direction and the thickness direction of the holder after the first holder is buckled to the second holder, so as to improve the position-limiting stability of the first battery cell, thereby improving the structural stability of the whole battery.

In an alternative, the blocking portion is formed where the first position-limit portion protrudes outward towards the surface of the first battery cell. By providing the blocking portion as an integral protruding structure, while the position of the first battery cell is limited, the structural strength of the blocking portion can be effectively ensured, and the blocking portion can be prevented from being damaged by an external force.

According to another aspect of the embodiments of the present invention, there is provided an electrical apparatus comprising a battery as described above, wherein the battery is used to provide electric energy.

The above description is only a summary of the technical solutions of the present invention. In order that the technical means of the present invention can be more clearly understood and readily carried out in accordance with the present specification, and in order that the above and other objects, features and advantages of the present invention can be more obvious and understandable, specific implementations of the present invention are exemplified below.

### Description of Drawings

Various other advantages and benefits will become apparent to those of ordinary skill in the art upon reading the following detailed description of the preferred embodiments. The drawings are only for the purpose of illustrating the preferred embodiments, and are not to be construed as limiting the present application. Also, the same components are denoted by the same reference numerals throughout the drawings. In the drawings:
Fig. 1 is a schematic structural view of a vehicle provided in some embodiments of the present application;
Fig. 2 is a schematic exploded view of a battery provided in some embodiments of the present application;
Fig. 3 is a schematic view of assembling a first battery cell, a first holder and a second holder provided in some embodiments of the present application;
Fig. 4 is a schematic structural view of a first holder provided in some embodiments of the present application;
Fig. 5 is a schematic structural view of a first holder provided in some other embodiments of the present application;
Fig. 6 is a schematic view of the cooperation of a first holder, a third holder, and a second battery cell provided in some embodiments of the present application;
Fig. 7 is a partial enlarged view of K in Fig. 6;
Fig. 8 is a schematic view of the cooperation of a first holder, a second holder, and a battery cell provided in some embodiments of the present application;
Fig. 9 is a partial enlarged view of M in Fig. 8.

### Reference numerals:

Vehicle 1000;
Battery 100, Controller 200 and Motor 300;
Box body 10, First portion 11 and Second portion 12;
Battery cell 110, First battery cell 110a, Second battery cell 110b and End face 111;
First holder 120, First position-limit portion 121, First connecting portion 122, First surface 123, Glue injection port 124, Glue overflow port 125, Third position-limit portion 126 and Blocking portion 127;
Second holder 130, Second position-limit portion 131 and Second connecting portion 132.

### Detailed Description

Embodiments of the technical solutions of the present invention will be described in detail below in conjunction with the accompanying drawings. The following embodiments are only used to more clearly illustrate the technical solutions of the present invention, and therefore are only used as examples and cannot be used to limit the scope of protection of the present invention.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second", and the like in the description and claims of the present application or in the above drawings are used for distinguishing between different objects rather than describing a particular order or a primary/secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined. For example, it may be a fixed connection, a detachable connection, or an integral connection; and it may be a direct connection or an indirect connection through an intermediate medium, or may be an internal communication between two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of various components in the embodiments of the present application, as well as the overall thickness, length, width and other dimensions of the integrated apparatus shown in the drawings are only exemplary illustrations, and should not constitute any limitation on the present application.

"A plurality of" in the present application refers to more than two (including two).

At present, from the perspective of the development of the market situation, power batteries are more and more widely used. The power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

In order to increase the output current and the output voltage of a battery, it is generally necessary to fix a plurality of battery cells in groups so as to perform the subsequent electrical connection and boxing, and after the battery is assembled into the box, it may also need to be disassembled and repaired during the subsequent use due to a failure of an internal part, such as the thermal runaway of a battery cell.

An existing battery is assembled by providing an integral holder to assemble a plurality of battery cells; however, such an integral holder occupies a large space, and the battery cells need to be inserted into the holder for position-limiting; the high positioning requirement makes the assembly to be relatively difficult, which results in low degree of automation, and is unfavorable for the later disassembly and maintenance.

In order to improve the assembly efficiency of a battery, the present application proposes a battery structure, wherein a first holder and a second holder are provided on both sides of a battery cell, the first holder and the second holder are recessed respectively to form a first position-limit portion and a second position-limit portion, and the first holder and the second holder are buckled to each other, so that the first position-limit portion and the second position-limit portion cooperate to form a position-limit space for accommodating the battery cell. The assembly of such a battery structure is simple, it is only necessary to buckle the first holder and the second holder to fix the battery cell, and the disassembly is convenient, so that the assembly time and the replacement time for repair can be shortened, thereby improving the efficiency of production and assembly as well as the efficiency of repair and replacement for the battery.

The battery disclosed in the embodiments of the present application can be used in, but not limited to, electrical apparatuses such as a vehicle, a ship, or an aircraft. The power supply system of the electrical apparatus can be composed of the battery cell, battery and the like disclosed in the present application, so that when the above-mentioned electrical apparatus or the power supply system fails, it is advantageous for repairing and replacing the battery structure, thereby reducing the failure influence.

Embodiments of the present application provide an electrical apparatus that uses a battery as a power supply, and the electrical apparatus may be, but is not limited to, a mobile phone, a tablet, a laptop, an electric toy, an electric tool, a battery vehicle, an electric vehicle, a ship, a spacecraft, and so on. Among them, electric toys can include stationary or mobile electric toys, such as a gaming machine, an electric car toy, an electric boat toy, an electric airplane toy, and the like, and spacecrafts can include an airplane, a rocket, an aerospace plane, a spaceship, and the like.

For the convenience of description, the following embodiments are illustrated by taking a vehicle 1000 as an example of an electrical apparatus according to an embodiment of the present application.

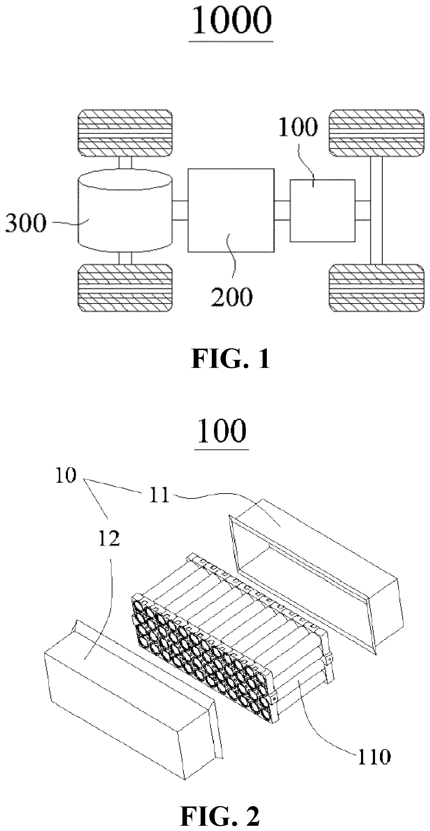

Referring to Fig. 1, it is a schematic structural view of a vehicle 1000 provided by some embodiments of the present application. The vehicle 1000 may be a fuel vehicle, a gas vehicle, or a new energy vehicle, and the new energy vehicle may be an all-electric vehicle, a hybrid vehicle, an extended range electric vehicle, or the like. The interior of the vehicle 1000 is provided with a battery 100, and the battery 100 may be provided at the bottom or the head or the tail of the vehicle 1000. The battery 100 may be used to power the vehicle 1000. For example, the battery 100 may be used as an operating power source of the vehicle 1000. The vehicle 1000 may further comprise a controller 200 and a motor 300, wherein the controller 200 is used to control the battery 100 to power the motor 300, for example, for the operating power demand when the vehicle 1000 is starting, navigating and driving.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to Fig. 2, it is a schematic exploded view of a battery 100 provided in some embodiments of the present application. The battery 100 comprises a box body 10 and a battery cell 110, which is accommodated within the box body 10. Here, the box body 10 is used to provide an accommodating space for the battery cell 110, and the box body 10 can be of various structures. In some embodiments, the box body 10 may comprise a first portion 11 and a second portion 12. The first portion 11 and the second portion 12 are covered by each other, and the first portion 11 and the second portion 12 together define an accommodating space for accommodating the battery cell 110. The second portion 12 may be a hollow structure with one end open, the first portion 11 may be a plate-like structure, and the first portion 11 covers the opening side of the second portion 12, so that the first portion 11 and the second portion 12 together define the accommodating space. It is also possible that each of the first portion 11 and the second portion 12 is a hollow structure with one side open, and the opening side of the first portion 11 covers the opening side of the second portion 12. Of course, the box body 10 formed by the first portion 11 and the second portion 12 can be of various shapes, such as a cylinder or a cuboid.

In the battery 100, there may be a plurality of battery cells 110, and the plurality of battery cells 110 can be connected in series or parallel or parallel-series connection, wherein the parallel-series connection means that the plurality of battery cells 110 are connected in both series and parallel. The plurality of battery cells 110 may be directly connected together in series or parallel or parallel-series connection, and then the entirety formed by the plurality of battery cells 110 is accommodated within the box body 10; Of course, the battery 100 may also be formed in such a way that a plurality of battery cells 110 are first connected in series or parallel or parallel-series connection to form a battery group, and then a plurality of battery groups are connected in series or parallel or parallel-series connection to form an entirety which is accommodated within the box body 10. The battery 100 may further comprise other structures, for example, the battery 100 may further comprise a bus member for electrically connecting the plurality of battery cells 110.

Each battery cell 110 may be a secondary battery or a primary battery; or may be a lithium-sulfur battery, a sodium-ion battery or a magnesium-ion battery, but is not limited thereto. The battery cell 110 may be in the shape of a cylinder, a flat body, a cuboid or others.

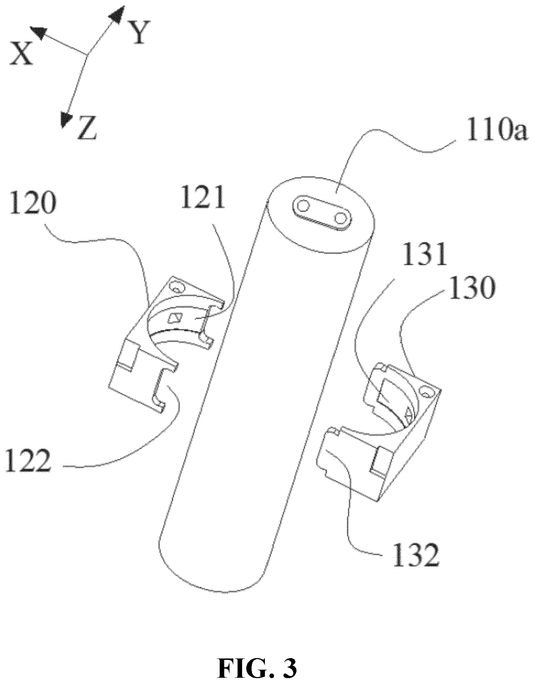

Referring to Fig. 3, it is a schematic view of assembling a first battery cell 110a, a first holder 120 and a second holder 130 provided in some embodiments of the present application.

For the convenience of description, the X-axis direction in Fig. 3 denotes a first direction, and the first direction X is parallel to the radial direction of the first battery cell 110a; the Y-axis direction denotes a second direction, the second direction Y is perpendicular to the first direction X, and the second direction Y is parallel to the other radial direction of the first battery cell 110a; and the Z-axis direction denotes the thickness direction of the first holder 120, which is also the height direction of the first battery cell 110a, and any two of the X, Y and Z-axis directions are perpendicular to each other.

As shown in Fig. 3, the battery 100 comprises the first battery cell 110a, the first holder 120 and the second holder 130. The first holder 120 and the second holder 130 are provided at both ends of the first battery cell 110a along the first direction X, the first holder 120 is recessed along the first direction X away from the second holder 130 to form a first position-limit portion 121, the second holder 130 is recessed along the first direction X away from the first holder 120 to form a second position-limit portion 131, and the first position-limit portion 121 and the second position-limit portion 131 are oppositely provided. The first holder 120 and the second holder 130 are buckled along the first direction X, so that the first position-limit portion 121 and the second position-limit portion 131 cooperate to form a position-limit space for accommodating the first battery cell 110a.

The first battery cell 110a may be a cylindrical battery cell as shown in Fig. 3, and may also be a cuboid-shaped battery cell or a battery cell with other geometric shapes, and the shapes of the first position-limit portion 121 and the second position-limit portion 131 formed by recessing the first holder 120 and the second holder 130 can be adjusted according to the corresponding designs of the battery cells with different shapes to adapt to their shapes, so as to meet the position-limitation and fixation of the battery cells with different shapes.

The first holder 120 and the second holder 130 are buckled and connected along the X-axis direction to limit the position of the first battery cell 110a, so that the first battery cell 110a is conveniently placed into the position-limit space without being aligned with and inserted into the position-limit space from one side of the first holder 120 and the second holder 130 along the second direction Y upon insertion, so as to reduce the assembly accuracy requirement of the first battery cell 110a, thereby reducing the difficulty of assembling the first battery cell 110a to the first holder 120 and the second holder 130, which is advantageous for realizing the automation of assembly and improving the production assembly efficiency of the battery 100 to meet the production capacity requirement.

Moreover, when the structure of the battery 100 needs to be repaired and replaced due to abnormality of one of the first battery cells 110a, the first battery cell 110a which needs to be replaced can be removed by disassembling the corresponding two buckled first holder 120 and second holder 130, whereas the other parts of the battery 100 do not need to be disassembled. When one of the first holder 120 or the second holder 130 is damaged, it can also be repaired by means of partial disassembly. Therefore, the structure of the battery 100 facilitates the repair and replacement of the damaged parts, and the repair and replacement time can be effectively shortened.

With continued reference to Fig. 3, according to some embodiments of the present application, optionally an end portion of the first holder 120 along the second direction Y is provided with a first connecting portion 122, that is, an end portion along the Y-axis direction is provided with the first connecting portion 122, an end portion of the second holder 130 along the second direction Y is provided with a second connecting portion 132, the first connecting portion 122 and the second connecting portion 132 are buckled to each other, the second direction Y is perpendicular to the first direction X, and the second direction Y is perpendicular to the thickness direction Z of the first holder 120, that is, the Y-axis direction is perpendicular to both the X-axis direction and the Z-axis direction (the thickness direction of the first holder 120).

The first connecting portion 122 and the second connecting portion 132 can be buckled and fixed to each other by means of elastic fastener, sliding clamp, and other structures, so as to facilitate the assembly of the first holder 120 and the second holder 130, thereby improving the assembly efficiency of the battery 100.

When a plurality of first battery cells 110a are accommodated in the position-limit space formed by the first holder 120 and the second holder 130, or the first holder 120 and the second holder 130 are provided with a plurality of accommodating spaces, each of which accommodates one first battery cell 110a, by providing the first connecting portion 122 at an end of the first holder 120 and providing the second connecting portion 132 at an end of the second holder 130, the first holder 120 and the second holder 130 can simultaneously limit the positions of the plurality of first battery cells 110a by buckling the first connecting portion 122 to the second connecting portion 132, so that the assembly efficiency of the battery 100 can be effectively improved to accelerate the production.

The first connecting portion 122 and the second connecting portion 132 are provided respectively at the end portions of the first holder 120 and the second holder 130, and the first connecting portion 122 is buckled to the second connecting portion 132 to limit the position of the first battery cell 110a, so that the buckling place can be prevented from being blocked by the first battery cell 110a, thus facilitating unbuckling when the first battery cell 110a, the first holder 120 or the second holder 130 is repaired and replaced, and improving the efficiency of repair and replacement.

With continued reference to Fig. 3, in some embodiments of the present application, optionally the first connecting portion 122 can be provided with a groove, the second connecting portion 132 can be correspondingly provided with a protrusion, and the protrusion can be snap fitted in the groove, so that the first holder 120 and the second holder 130 are buckled to each other.

Optionally, as shown in Fig. 3, the groove can be formed by recessing the surface of the first holder 120 facing the second holder 130 in a direction away from the second holder 130, and correspondingly, the protrusion can be formed by protruding the surface of the second holder 130 facing the first holder 120 in a direction towards the first holder 120, and when the first holder 120 is buckled to the second holder 130, the protrusion can be inserted into the groove along the first direction X; the protrusion and the groove may be in interference fit, so that after the protrusion is inserted into the groove, the fit can be made stronger under the influence of the interaction force between the protrusion and the groove.

It is to be understood that the provision of the above-mentioned protrusion and groove is only one of the realizable snap fit methods provided in the embodiments of the present application, and the snap fit methods of the groove and the protrusion in the present application are not limited thereto. For example, It is also possible that the surface of the first holder 120 along the second direction Y is recessed to form the groove, and the protrusion is clamped into the groove in the second direction Y to realize the cooperation with the groove by snap fit.

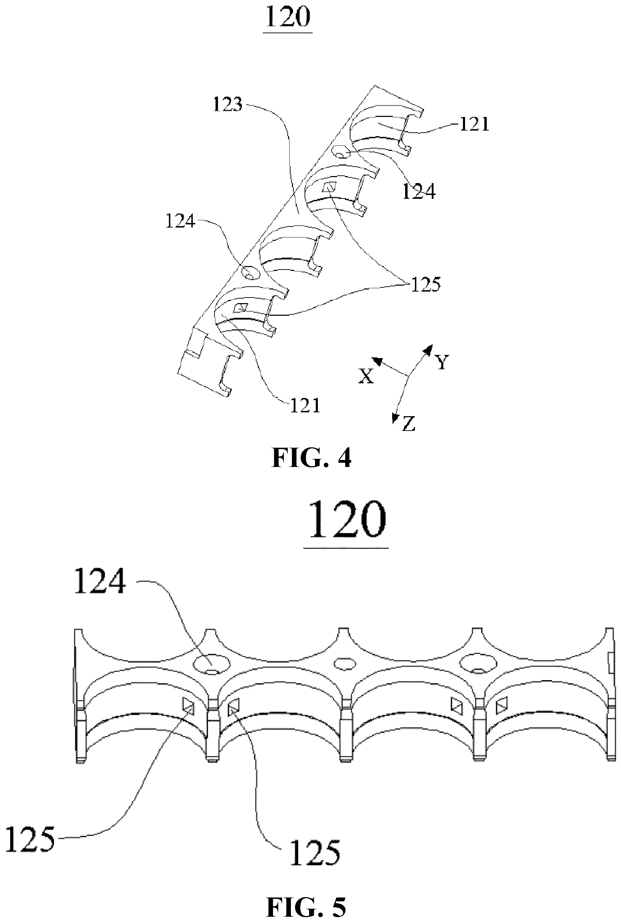

Referring to Fig. 4, it is a schematic structural view of a first holder 120 provided in some embodiments of the present application_{∘}

In some embodiments of the present application, optionally the first holder 120 may further comprise a first surface 123 in the thickness direction Z, that is, the first holder 120 has the first surface 123 in the Z-axis direction, the first surface 123 is provided with a glue injection port 124, the surface of the first position-limit portion 121 facing the first battery cell 110a is provided with a glue overflow port 125, and the glue injection port 124 is communicated with the glue overflow port 125, so that the glue in the glue injection port 124 enters the position-limit space through the glue overflow port 125.

In order to enhance the stability of the first battery cell 110a when it is fixed in the position-limit space, the first battery cell 110a can be firmly connected to the first holder 120 and the second holder 130 by injecting glue. Specifically, a glue injection port 124 can be provided on the first surface 123, and by injecting glue into the glue injection port 124, the glue flows through a glue overflow port 125 into the gap between the first battery cell 110a and the first holder 120 as well as the second holder 130 in the position-limit space, and after the glue is coagulated, the first battery cell 110a can be adhesively connected to the first holder 120 and the second holder 130, thereby improving the stability of the overall structure.

The glue injection port 124 is provided on the first surface 123 to facilitate the glue injection operation, and the opening of the glue injection port 124 may have a funnel-shaped structure as shown in Fig. 4, so as to facilitate the positioning of the glue injection device during glue injection as well as the cushioning of the glue.

It should be noted that the glue injection port 124 provided on the first holder 120 is only one of the exemplary glue injection embodiments, and in some other embodiments, in order to sufficiently bond the first holder 120, the second holder 130 and the first battery cell 110a, a glue injection port 124 and a glue overflow port 125 may also be provided at corresponding positions on the second holder 130, so as to fully improve the stability of the overall structure of the battery 100.

With continued reference to Fig. 4, in some embodiments of the present application, optionally at least two first position-limit portions 121 may be provided on the first holder 120, the at least two first position-limit portions 121 are arranged along the second direction Y, the second direction Y is perpendicular to the first direction X, and the second direction Y is also perpendicular to the thickness direction Z of the first holder 120, that is, the Y-axis direction is perpendicular to both the X-axis direction and the Z-axis direction.

Considering that the battery 100 may be provided by a plurality of the first battery cells 110a side by side, at least two first position-limit portions 121 are provided on the first holder 120 along the Y-axis direction, and correspondingly, at least two second position-limit portions 131 may be provided on the second holder 130 along the Y-axis direction, thus realizing the fixation of a single row of the plurality of the first battery cells 1 10a. The plurality of the first position-limit portions 121 on the first holder 120 and the plurality of the second position-limit portions 131 on the second holder 130 correspond to each other, and when the battery 100 comprises a plurality of the first battery cells 110a, the first holder 120 and the second holder 130 are buckled to each other, and the plurality of the first position-limit portions 121 and the plurality of the second position-limit portions 131 are clamped to each other, so that the plurality of the first battery cells 110a are fixed at one time, which greatly facilitates the fixing operation and improves the assembly efficiency of the battery 100.

With continued reference to Fig. 5, it is a schematic structural view of a first holder 120 provided in some other embodiments of the present application.

According to some embodiments of the present application, as shown in Fig. 5, optionally the glue overflow ports 125 on the at least two first position-limit portions 121 are communicated with the same glue injection port 124.

Specifically, as shown in Fig. 5 (taking the first holder 120 as an example in the figure), the glue overflow ports 125 on the adjacent first position-limit portions 121 on the first holder 120 are communicated with the same glue injection port 124, and the glue overflow ports 125 on the adjacent second position-limit portion 131 on the second holder 130 may also be communicated with the same glue injection port 124. This provision optimizes the structures of the glue injection port 124 and the glue overflow port 125, so that glue can be injected into position-limit spaces in two adjacent first position-limit portions 121 or two adjacent second position-limit portions 131 at the same time through one glue injection port 124, and each position-limit space can be fully injected with the glue, thus ensuring structural stability; and moreover, such provision is also advantageous for reducing the number of glue injections and improving the glue injection efficiency.

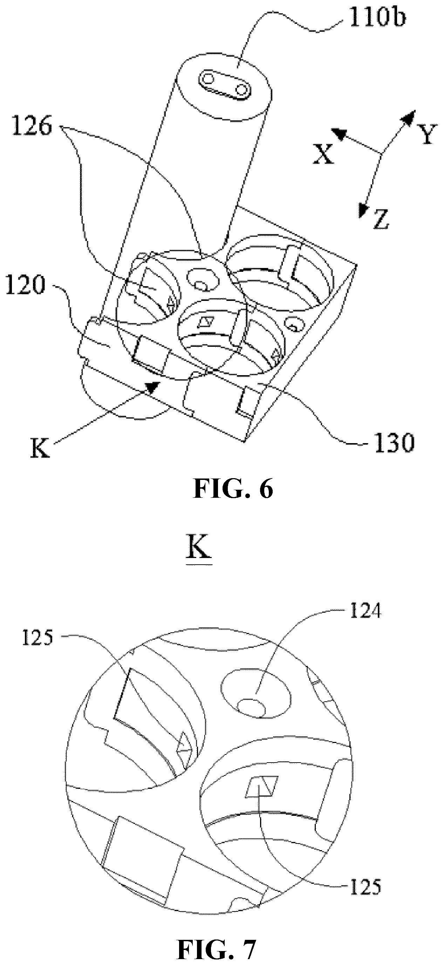

Referring to Fig. 6, it is a schematic view illustrating the cooperation of a first holder 120, a second holder 130 and a second battery cell 110b provided in some embodiments of the present application.

According to some embodiments of the present application, optionally the battery 100 further comprises a second battery cell 110b, the first holder 120 is further provided with a third position-limit portion 126, the third position-limit portion 126 is located on the surface of the first holder 120 away from the second holder 130, the third position-limit portion 126 is formed by recessing the first holder 120 towards the second holder 130, and the third position-limit portion 126 is used to form a position-limit space for the second battery cell 110b.

By providing the third position-limit portion 126 on the surface of the first holder 120 facing away from the second holder 130, the first holder 120 can be provided with position-limit portions on both sides along the second direction Y, and the position-limit portions provided on both sides can be used to cooperate with the second holder 130 to form a position-limit space for accommodating the first battery cell 110a or the second battery cell 110b. Both sides of the second holder 120 along the second direction Y may also be provided with position-limit portions for forming a different position-limit space. In this way, it is possible to use fewer first holders 120 and second holders 130 to limit the positions of even more first battery cells 110a or second battery cells 110b. For example, it is possible to use one first holder 120 and two second holders 130 to limit the positions of two rows of first battery cells 110a or second battery cells 110b arranged along the second direction Y, thereby effectively improving the assembly efficiency of the battery.

With continued reference to Fig. 7, it is a partial enlarged view of K in Fig. 6.

According to some embodiments of the present application, as shown in Fig. 7, optionally the surface of the first position-limit portion 121 facing the first battery cell 110a is provided with a glue overflow port 125, the surface of the third position-limit portion 126 facing the second battery cell 110b is provided with a glue overflow port 125, and the two glue overflow ports 125 on the first position-limit portion 121 and the third position-limit portion 126 are communicated with the same glue injection port 124.

By providing the two glue overflow ports 125 on the first position-limit portion 121 and the third position-limit portion 126 in communication with the same glue injection port 124, the glue injection and fixing operation for the first battery cell 110a and the second battery cell 110b in the position-limit portions on both sides can be realized through the same glue injection port 124, the number of glue injection operations is reduced, the glue injection efficiency is improved, and the effective and sufficient glue injection and bonding can also be ensured in each position-limit space.

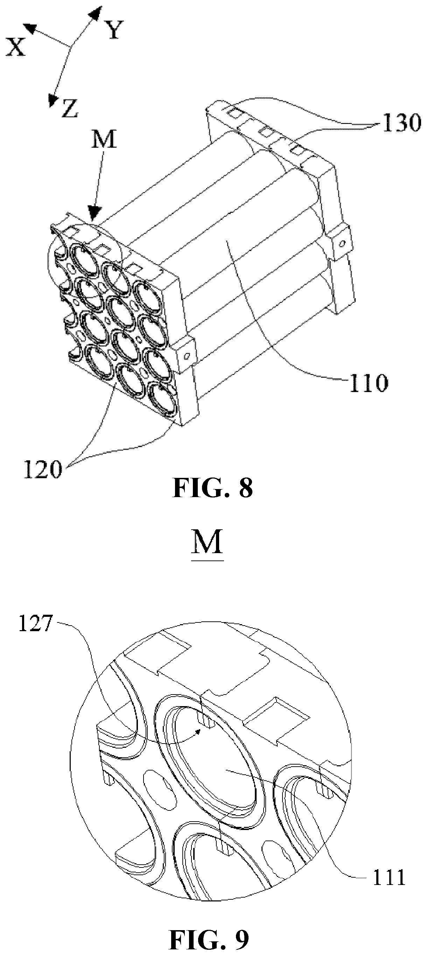

Referring to Fig. 8, it is a schematic view illustrating the cooperation of a first holder 120, a second holder 130 and a battery cell 110 provided in some embodiments of the present application.

According to some embodiments of the present application, as shown in Fig. 8, optionally the battery 100 comprises at least two first holders 120 and at least two second holders 130, and along the thickness direction Z of the first holders 120, the at least two first holders 120 are arranged along the thickness direction Z, and buckled to the corresponding second holders 130 to form a plurality of position-limit spaces.

As can be seen from Fig. 8, both ends of the battery cell 110 are provided with a first holder 120 and a second holder 130, and at least two first holders 120 and at least two second holders 130 are correspondingly provided respectively along the thickness direction Z, so that the position-limitation and fixation of both ends of the battery cell 110 are realized, and the wobble of the battery cell 110 in the position-limit space is reduced, thereby further improving the assembly stability of the battery cell 110.

With continued reference to Fig. 9, it is a partial enlarged view of M in Fig. 8.

According to some embodiments of the present application, as shown in Fig. 9, optionally the first battery cell 110a comprises two end faces 111 oppositely provided along the thickness direction Z (taking one end face 111 as an example in the figure), and both of the first holders 120 are provided with blocking portions 127, and the two blocking portions 127 abut against the two end faces 111 of the first battery cell 110a respectively to restrict the displacement of the first battery cell 110a along the thickness direction Z.

By providing the blocking portions 127 on the first holders 120 or the second holders 130 at both ends of the first battery cell 110a, the first holders 120 can be buckled to the second holders 130 to restrict the displacement of the first battery cell 110a in the thickness direction Z, thereby improving the position-limiting stability of the first battery cell 110a, and improving the stability of the overall structure of the battery 100.

It should be noted that, in some other embodiments, the second holder 130 may also be provided with a blocking portion 127, so that the position-limiting stability of the first battery cell 110a in the thickness direction Z can be further enhanced by the combined action of the two blocking portions 127.

With continued reference to Fig. 9, in some embodiments of the present application, optionally the blocking portion 127 can be formed where the first position-limit portion 121protrudes outward towards the surface of the first battery cell 110a.

The blocking portion 127 may be an annular plate-like structure as shown in Fig. 9, or may be a bump protruding from the surface of the first holder 120 and abutting against the end face 111 of the first battery cell 110a.

By providing the blocking portion 127 as an integral protruding structure, while the position of the first battery cell 110a is limited, the structural strength of the blocking portion 127 can be effectively ensured, and the blocking portion 127 can be prevented from being damaged by an external force.

Finally, it should be noted that the above embodiments are merely used for illustrating rather than limiting the technical solutions of the present invention. Although the present invention has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present invention, which shall fall within the scope of the claims and the specification of the present invention. In particular, the technical features mentioned in the various embodiments can be combined in any manner as long as there is no structural conflict. The present invention is not limited to the particular embodiments disclosed herein, but rather comprises all technical solutions falling within the scope of the claims.

## Claims

1. A battery, comprising:
a first battery cell;
a first holder and a second holder provided at both ends of the first battery cell along a first direction, wherein the first holder is recessed along the first direction away from the second holder to form a first position-limit portion, the second holder is recessed along the first direction away from the first holder to form a second position-limit portion, and the first position-limit portion and the second position-limit portion are oppositely provided,
the first holder and the second holder are buckled along the first direction, so that the first position-limit portion and the second position-limit portion cooperate to form a position-limit space for accommodating the first battery cell.

2. The battery according to claim 1, wherein an end portion of the first holder along the second direction is provided with a first connecting portion, an end portion of the second holder along the second direction is provided with a second connecting portion, the first connecting portion and the second connecting portion are buckled to each other, wherein the second direction is perpendicular to the first direction, and the second direction is perpendicular to the thickness direction of the first holder.

3. The battery according to claim 2, wherein the first connecting portion is provided with a groove, the second connecting portion is provided with a protrusion, and the protrusion is snap fitted in the groove, so that the first holder and the second holder are buckled to each other.

4. The battery according to any one of claims 1-3, wherein the first holder further comprises a first surface in the thickness direction, the first surface is provided with a glue injection port, the surface of the first position-limit portion facing the first battery cell is provided with a glue overflow port, and the glue injection port is communicated with the glue overflow port, so that the glue flowing into the glue injection port enters the position-limit space through the glue overflow port.

5. The battery according to claim 4, wherein the first holder is provided with at least two first position-limit portions, the at least two first position-limit portions are arranged along the second direction, the second direction is perpendicular to the first direction, and the second direction is also perpendicular to the thickness direction of the first holder.

6. The battery according to claim 5, wherein the glue overflow ports on the at least two first position-limit portions are communicated with the same glue injection port.

7. The battery according to any one of claims 4-6, wherein the battery further comprises a second battery cell, the first holder is further provided with a third position-limit portion located on the surface of the first holder away from the second holder, the third position-limit portion is formed by recessing the first holder towards the second holder, and the third position-limit portion is used to form a position-limit space for the second battery cell.

8. The battery according to claim 7, wherein the surface of the first position-limit portion facing the first battery cell is provided with a glue overflow port, the surface of the third position-limit portion facing the second battery cell is provided with a glue overflow port, and the two glue overflow ports on the first position-limit portion and the third position-limit portion are communicated with a same glue injection port.

9. The battery according to any one of claims 1-8, wherein the battery comprises at least two first holders and at least two second holders, and along the thickness direction of the first holders, the at least two first holders are arranged along the thickness direction, and buckled to the corresponding second holders to form a plurality of the position-limit spaces.

10. The battery according to claim 9, wherein the first battery cell comprises two end faces oppositely provided along the thickness direction, and both of the first holders are provided with blocking portions, and the two blocking portions abut against the two end faces respectively to restrict the displacement of the first battery cell along the thickness direction.

11. The battery according to claim 10, wherein the blocking portion is formed where the first position-limit portion protrudes outward towards the surface of the first battery cell.

12. An electrical apparatus **characterized by** comprising the battery of any one of claims 1-11, wherein the battery is used for providing electric energy.
